# EUROPEAN PATENT APPLICATION

(11) **EP 4 675 604 A1**
(43) Date of publication of application: **07.01.2026**
(21) Application number: 25186594.5
(22) Date of filing: 01.07.2025
(51) Int. Cl.: G09G 3/3233

(54) **PIXEL, DISPLAY DEVICE, AND ELECTRONIC DEVICE INCLUDING THE SAME**

(30) Priority: 03.07.2024 KR 20240087521
(71) Applicant: Samsung Display Co., Ltd., Yongin-si, Gyeonggi-do 17113 (KR)
(72) Inventor: Shin, Dong Hee, Yongin-si, Gyeonggi-do 17113 (KR); Son, Sun Kwun, Yongin-si, Gyeonggi-do 17113 (KR); Cha, Na Hyeon, Yongin-si, Gyeonggi-do 17113 (KR)
(74) Representative: Gulde & Partner

(57) **Abstract**

A display device includes: a sub-pixel connected to a data line; and a light sensor adjacent to the sub-pixel in a first direction and connected to a readout line, a first element control line, and a second element control line, wherein the readout line is configured to receive a current corresponding to a light amount of light applied to the light sensor, and in an area where the light sensor is formed, a third conductor configuring a portion of the readout line is between a first conductor configuring a portion of the first element control line and a second conductor configuring a portion of the second element control line.

## Description

### BACKGROUND

### 1. Field

Aspects of some embodiments of the present disclosure relates to a pixel, a display device, and an electronic device including the same.

### 2. Description of the Related Art

As information technology develops, importance of a display device, which is a connection medium between a user and information, is emerging. In response to this, a use of a display device such as a liquid crystal display device and an organic light emitting display device is increasing. In addition, the display device may perform a user authentication function by sensing a user's fingerprint using a light sensor or may sense an illuminance.

The above information disclosed in this Background section is only for enhancement of understanding of the background and therefore the information discussed in this Background section does not necessarily constitute prior art.

### SUMMARY

Aspects of some embodiments of the present disclosure include a display device that may be capable of relatively improving sensing accuracy of a light sensor, and an electronic device including the display device.

According to some embodiments of the present disclosure, a display device includes a sub-pixel connected to a data line, and a light sensor adjacent to the sub-pixel in a first direction and connected to a readout line, a first element control line, and a second element control line. According to some embodiments, the readout line is configured to receive a current corresponding to a light amount of light applied to the light sensor. According to some embodiments, in an area where the light sensor is formed, a third conductor configuring a portion of the readout line is between a first conductor configuring a portion of the first element control line and a second conductor configuring a portion of the second element control line.

The element control lines may enable selective activation of the light sensors. For example, these control lines can be used to switch between different light sensors to capture varying light conditions. This control may be achieved using transistors connected to the respective light sensors. By applying an appropriate signal to the control lines, the transistors can be switched to activate the desired light sensor and read its measurement.

According to some embodiments, in an area where the sub-pixel is formed, a fourth conductor configuring a portion of the data line may extend along a second direction perpendicular to the first direction, and in the area where the light sensor is formed, each of the first to third conductors may extend along the second direction.

According to some embodiments, while the current corresponding to the light amount of the light applied to the light sensor is transmitted to the readout line, at least one of the first conductor or the second conductor may be configured to shield coupling to the third conductor from the fourth conductor. In other words, at least one of the first conductor or the second conductor may be configured to provide shielding against coupling to the third conductor from the fourth conductor when the current corresponding to the light amount of the light applied to the light sensor is transmitted to the readout line.

According to some embodiments, while the current corresponding to the light amount of the light applied to the light sensor is transmitted to the readout line, a voltage corresponding to an activation level or a deactivation level may be respectively applied to the first conductor and the second conductor. In other words, the device may have a configuration such that, in operation, while the current corresponding to the light amount of the light applied to the light sensor is transmitted to the readout line, a voltage corresponding to an activation level or a deactivation level is respectively applied to the first conductor and the second conductor.

According to some embodiments, the light sensor may include a first sensing transistor having a control electrode connected to a first sensing node and a first electrode connected to a common voltage, a second sensing transistor having a control electrode connected to a sensing gate line, a first electrode connected to a second electrode of the first sensing transistor, and a second electrode connected to the readout line, a third sensing transistor having a control electrode connected to a reset line, a first electrode connected to a reset voltage, and a second electrode connected to the first sensing node, a fourth sensing transistor having a control electrode connected to the first element control line and a first electrode connected to the first sensing line, a fifth sensing transistor having a control electrode connected to the second element control line and a first electrode connected to the first sensing line, a first light receiving element connected between a second electrode of the fourth sensing transistor and a power voltage, and a second light receiving element connected between the second electrode of the fifth sensing transistor and the power voltage.

According to some embodiments, in response to a sensing on period of the light sensor, the first element control line may be configured to receive a voltage of an activation level, the second element control line may be configured to receive a voltage of a deactivation level, and the readout line may be configured to receive a current corresponding to a light amount of light applied to the first light receiving element. In other words, the device may have a configuration such that the first element control line is capable of, in response to a sensing on period of the light sensor, receiving a voltage of an activation level, the second element control line is capable of receiving a voltage of a deactivation level, and the readout line is capable of receiving a current corresponding to a light amount of light applied to the first light receiving element.

According to some embodiments, in response to a sensing on period of the light sensor, the first element control line may be configured to receive a voltage of a deactivation level, the second element control line is configured to receive a voltage of an activation level, and the readout line may be configured to receive a current corresponding to a light amount of light applied to the second light receiving element. In other words, the device may have a configuration such that the first element control line is capable of, in response to a sensing on period of the light sensor, receiving a voltage of a deactivation level, the second element control line is capable of receiving a voltage of an activation level, and the readout line is capable of receiving a current corresponding to a light amount of light applied to the second light receiving element.

According to some embodiments of the present disclosure, a display device includes a display panel including a plurality of sub-pixels and a plurality of light sensors, and a display panel driver configured to drive the display panel. According to some embodiments, each of the plurality of sub-pixels is connected to the display panel driver through data lines. According to some embodiments, each of the plurality of light sensors is connected to the display panel driver through a readout line, a first element control line, and a second element control line. According to some embodiments, the readout line may be configured to receive a current corresponding to a light amount of light applied to the light sensor. According to some embodiments, in an area where one light sensor among the plurality of light sensors is formed, a third conductor configuring a portion of the readout line is between a first conductor configuring a portion of the first element control line and a second conductor configuring a portion of the second element control line.

According to some embodiments, the plurality of sub-pixels and the plurality of light sensors may be alternately arranged in a first direction, and the plurality of sub-pixels or the plurality of light sensors may be successively arranged in a second direction perpendicular to the first direction.

According to some embodiments, each of the plurality of light sensors may include a first light receiving element and a second light receiving element. According to some embodiments, a current generated from the first light receiving element may be selectively transmitted to a first sensing node, based on a first element control signal transmitted through the first element control line. According to some embodiments, a current generated from the second light receiving element may be selectively transmitted to the first sensing node, based on a second element control signal transmitted through the second element control line. In other words, the display device may be further configured such that a current generated from the first light receiving element is selectively transmittable to a first sensing node, under control of a first element control signal transmitted through the first element control line, and a current generated from the second light receiving element is selectively transmittable to the first sensing node, under control of a second element control signal transmitted through the second element control line.

According to some embodiments, a light sensor from among the light sensors may further include a first sensing transistor having a control electrode connected to the first sensing node and a first electrode connected to a common voltage, a second sensing transistor having a control electrode connected to a sensing gate line, a first electrode connected to a second electrode of the first sensing transistor, and a second electrode connected to the readout line, a third sensing transistor having a control electrode connected to a reset line, a first electrode connected to a reset voltage, and a second electrode connected to the first sensing node, a fourth sensing transistor having a control electrode connected to the first element control line and a first electrode connected to the first sensing line, and a fifth sensing transistor having a control electrode connected to the second element control line and a first electrode connected to the first sensing line. According to some embodiments, the first light receiving element may be connected between a second electrode of the fourth sensing transistor and a power voltage. According to some embodiments, the second light receiving element may be connected between a second electrode of the fifth sensing transistor and the power voltage.

According to some embodiments, in response to a sensing on period of the light sensor, the first element control line may be configured to receive a voltage of an activation level, the second element control line may be configured to receive a voltage of a deactivation level, and the readout line may be configured to receive a current corresponding to a light amount of light applied to the first light receiving element.

According to some embodiments, in response to a sensing on period of the light sensor, the first element control line may be configured to receive a voltage of a deactivation level, the second element control line may be configured to receive a voltage of an activation level, and the readout line may be configured to receive a current corresponding to a light amount of light applied to the second light receiving element.

According to some embodiments, in an area where one sub-pixel among the plurality of sub-pixels is formed, a fourth conductor configuring a portion of the data line from among the data lines may extend along the second direction. According to some embodiments, in an area where the light sensor is formed, each of the first to third conductors may extend along the second direction.

According to some embodiments, while the current corresponding to the light amount of the light applied to the light sensor is transmitted to the readout line, at least one of the first conductor or the second conductor may be configured to shield coupling to the third conductor from the fourth conductor.

According to some embodiments, while the current corresponding to the light amount of the light applied to the light sensor is transmitted to the readout line, a voltage corresponding to an activation level or a deactivation level may be respectively applied to the first conductor and the second conductor.

According to some embodiments of the present disclosure, an electronic device includes a processor configured to provide input image data to a display device, the display device configured to display an image based on the input image data, and a power supply configured to supply power to the display device. According to some embodiments, the display device includes a display panel including a plurality of sub-pixels and a plurality of light sensors, and a display panel driver configured to drive the display panel. According to some embodiments, each of the plurality of sub-pixels may be connected to the display panel driver through data lines, each of the plurality of light sensors may be connected to the display panel driver through a readout line, a first element control line, and a second element control line, a current corresponding to a light amount of light applied to the light sensor may be transmitted to the readout line, in an area where one light sensor among the plurality of light sensors is formed, a third conductor configuring a portion of the readout line may be between a first conductor configuring a portion of the first element control line and a second conductor configuring a portion of the second element control line.

According to some embodiments, each of the plurality of light sensors may be between any two sub-pixels among the plurality of sub-pixels in the first direction, and the plurality of sub-pixels or the plurality of light sensors may be successively arranged in a second direction perpendicular to the first direction.

According to some embodiments, each of the plurality of light sensors may include a first light receiving element and a second light receiving element. According to some embodiments, a current generated from the first light receiving element may be selectively transmitted to a first sensing node, based on a first element control signal transmitted through the first element control line. According to some embodiments, a current generated from the second light receiving element may be selectively transmitted to the first sensing node, based on a second element control signal transmitted through the second element control line.

According to some embodiments, while the current corresponding to the light amount of the light applied to the light sensor is transmitted to the readout line, at least one of the first conductor or the second conductor may be configured to shield coupling to the third conductor from a fourth conductor configuring a portion of a data line from among the data lines. In other words, at least one of the first conductor or the second conductor may be configured to provide shielding against coupling to the third conductor from a fourth conductor configuring a portion of a data line from among the data lines.

According to some embodiments of the present disclosure the display device and the electronic device including the same according to the present disclosure, sensing accuracy of the light sensor included in the display device may be relatively improved.

### BRIEF DESCRIPTION OF THE DRAWINGS

The above and other features of embodiments according to the present disclosure will become more apparent by describing in further detail aspects of some embodiments thereof with reference to the accompanying drawings, in which:
FIG. 1 is a block diagram illustrating a display device according to some embodiments of the present disclosure;
FIG. 2 is a diagram illustrating an example in which a sub-pixel and a light sensor are located in a display panel;
FIG. 3 is a circuit diagram illustrating aspects of the sub-pixel shown in FIGS. 1 and 2 according to some embodiments of the present disclosure;
FIG. 4 is a circuit diagram illustrating aspects of the light sensor shown in FIGS. 1 and 2 according to some embodiments of the present disclosure;
FIG. 5 is a timing diagram illustrating a method of driving the light sensor shown in FIG. 4 according to some embodiments of the present disclosure;
FIG. 6 is a circuit diagram illustrating aspects of the light sensor shown in FIGS. 1 and 2 according to some embodiments of the present disclosure;
FIGS. 7A and 7B are timing diagrams illustrating aspects of a method of driving the light sensor shown in FIG. 6;
FIG. 8 is a diagram illustrating a coupling phenomenon between a readout line connected to the light sensor and a data line connected to the sub-pixel;
FIG. 9 is a diagram illustrating a line structure connected to a light sensor in a display panel according to some embodiments of the present disclosure;
FIG. 10 is a block diagram illustrating an electronic device according to some embodiments of the present disclosure;
FIG. 11 is a diagram illustrating embodiments in which the electronic device of FIG. 10 are implemented as a smartphone; and
FIG. 12 is a diagram illustrating embodiments in which the electronic device of FIG. 10 are implemented as a tablet PC.

### DETAILED DESCRIPTION

Hereinafter, aspects of some embodiments according to the present disclosure are described in more detail with reference to the accompanying drawings. It should be noted that in the following description, only portions necessary for understanding an operation according to the present disclosure are described, and descriptions of other portions are omitted in order not to obscure the subject matter of the present disclosure. In addition, the present disclosure may be embodied in other forms without being limited to the embodiments described herein. However, the embodiments described herein is provided to describe in detail enough to easily implement the technical spirit of the present disclosure to those skilled in the art to which embodiments according to the present disclosure belongs.

Throughout the specification, in a case where a portion is "connected" to another portion, the case includes not only a case where the portion is "directly connected" but also a case where the portion is "indirectly connected" with another element interposed therebetween. Terms used herein are for describing specific embodiments and are not intended to limit the disclosure. Throughout the specification, in a case where a certain portion "includes", the case means that the portion may further include another component without excluding another component unless otherwise stated. "At least any one of X, Y, and Z" and "at least any one selected from a group configured of X, Y, and Z" may be interpreted as one X, one Y, one Z, or any combination of two or more of X, Y, and Z (for example, XYZ, XYY, YZ, and ZZ). Here, "and/or" includes all combinations of one or more of corresponding configurations.

Here, terms such as first and second may be used to describe various components, but these components are not limited to these terms. These terms are used to distinguish one component from another component. Therefore, a first component may refer to a second component within a range without departing from the scope disclosed herein.

Spatially relative terms such as "under", "on", and the like may be used for descriptive purposes, thereby describing a relationship between one element or feature and another element(s) or feature(s) as shown in the drawings. Spatially relative terms are intended to include other directions in use, in operation, and/or in manufacturing, in addition to the direction depicted in the drawings. For example, when a device shown in the drawing is turned upside down, elements depicted as being positioned "under" other elements or features are positioned in a direction "on" the other elements or features. Therefore, in an embodiment, the term "under" may include both directions of on and under. In addition, the device may face in other directions (for example, rotated 90 degrees or in other directions) and thus the spatially relative terms used herein are interpreted according thereto.

Various embodiments are described with reference to drawings schematically illustrating ideal embodiments. Accordingly, it will be expected that shapes may vary, for example, according to tolerances and/or manufacturing techniques. Therefore, the embodiments disclosed herein cannot be construed as being limited to shown specific shapes, and should be interpreted as including, for example, changes in shapes that occur as a result of manufacturing. As described above, the shapes shown in the drawings may not show actual shapes of areas of a device, and the present embodiments are not limited thereto.

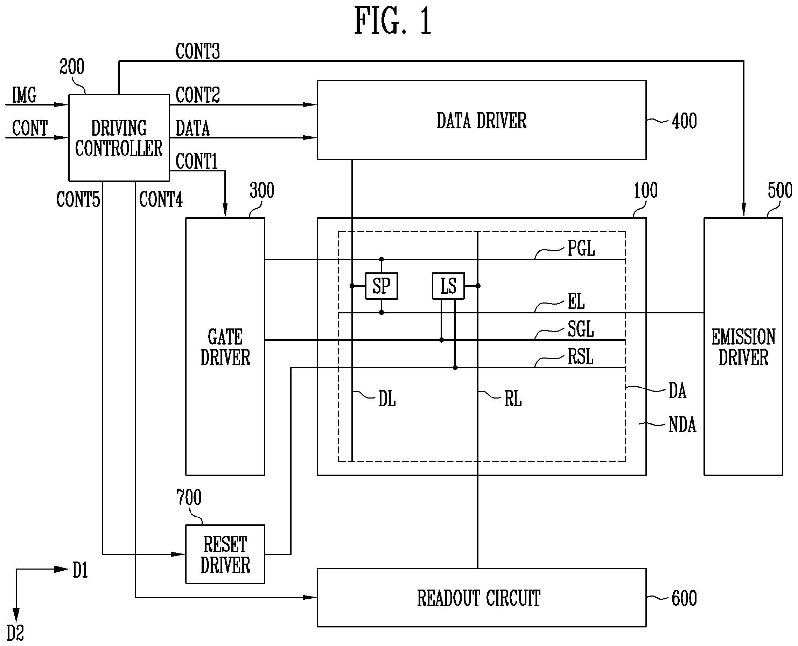

FIG. 1 is a block diagram illustrating a display device according to some embodiments of the present disclosure.

Referring to FIG. 1, the display device may include a display panel 100 and a display panel driver. The display panel driver may include a driving controller 200, a gate driver 300, a data driver 400, an emission driver 500, a readout circuit 600, and a reset driver 700. According to some embodiments, the driving controller 200 and the data driver 400 may be integrated into one chip.

The display panel 100 may include a display area DA displaying images and a non-display area NDA located adjacent to (e.g., in a periphery or outside a footprint of) the display area DA. According to some embodiments, the gate driver 300 and the emission driver 500 may be mounted in the non-display area NDA.

The display panel 100 may include a plurality of pixel gate lines PGL, a plurality of data lines DL, a plurality of emission lines EL, and a plurality of sub-pixels SP electrically connected to the pixel gate lines PGL, the data lines DL, and the emission lines EL. The pixel gate lines PGL and the emission lines EL may extend in a first direction D1, and the data lines DL may extend in a second direction D2 crossing (or perpendicular to) the first direction D1.

The display panel 100 may include a plurality of sensing gate lines SGL, a reset line RSL, a plurality of readout lines RL, and a plurality of light sensors LS electrically connected to the plurality of sensing gate lines SGL, the reset line RSL, and the readout lines RL.

According to some embodiments, it is illustrated that the sensing gate lines SGL are connected to the gate driver 300, but embodiments according to the present disclosure are not limited thereto. For example, the display panel driver may include a separate driver that drives the sensing gate lines SGL.

According to some embodiments, it is illustrated that the reset lines RSL are connected to the reset driver 700, but embodiments according to the present disclosure are not limited thereto. For example, the reset lines RSL may be driven by a separate driver that drives the gate driver 300, the emission driver 500, or the sensing gate lines SGL rather than the reset driver 700.

The driving controller 200 may receive input image data IMG and an input control signal CONT from a processor (for example, a graphic processing unit (GPU) or the like). For example, the input image data IMG may include red image data, green image data, and blue image data. According to some embodiments, the input image data IMG may further include white image data. As another example, the input image data IMG may include magenta image data, yellow image data, and cyan image data. The input control signal CONT may include a master clock signal and a data enable signal. The input control signal CONT may further include a vertical synchronization signal and a horizontal synchronization signal.

The driving controller 200 may generate a first control signal CONT1, a second control signal CONT2, a third control signal CONT3, a fourth control signal CONT4, a fifth control signal CON5, and a data signal DATA based on the input image data IMG and the input control signal CONT.

The driving controller 200 may generate the first control signal CONT1 for controlling an operation of the gate driver 300 based on the input control signal CONT and output the first control signal CONT1 to the gate driver 300. The first control signal CONT1 may include a vertical start signal and a gate clock signal.

The driving controller 200 may generate the second control signal CONT2 for controlling an operation of the data driver 400 based on the input control signal CONT and output the second control signal CONT2 to the data driver 400. The second control signal CONT2 may include a horizontal start signal and a load signal.

The driving controller 200 may generate the data signal DATA by receiving the input image data IMG and the input control signal CONT. The driving controller 200 may output the data signal DATA to the data driver 400.

The driving controller 200 may generate the third control signal CONT3 for controlling an operation of the emission driver 500 based on the input control signal CONT and output the third control signal CONT3 to the emission driver 500. The third control signal CONT3 may include a vertical start signal and an emission clock signal.

The driving controller 200 may generate the fourth control signal CONT4 for controlling an operation of the readout circuit 600 based on the input control signal CONT and output the fourth control signal CONT4 to the readout circuit 600.

The driving controller 200 may generate the fifth control signal CONT5 for controlling an operation of the set driver 700 based on the input control signal CONT and output the fifth control signal CONT5 to the reset driver 700.

The gate driver 300 may generate gate signals for driving the pixel gate lines PGL and sensing gate lines SGL in response to the first control signal CONT1 received from the driving controller 200. The gate driver 300 may output the gate signals to the pixel gate lines PGL and the sensing gate lines. For example, the gate driver 300 may sequentially output the gate signals to the pixel gate lines PGL and the sensing gate lines SGL.

The data driver 400 may receive the second control signal CONT2 and the data signal DATA from the driving controller 200. The data driver 400 may generate data voltages obtained by converting the data signal DATA into an analog voltage. The data driver 400 may output the data voltages to a data line DL.

The emission driver 500 may generate emission signals for driving the emission lines EL in response to the third control signal CONT3 received from the driving controller 200. The emission driver 500 may output the emission signals to the emission lines EL. For example, the emission driver 500 may sequentially output the emission signals to the emission lines EL.

The readout circuit 600 may generate sensing information based on sensing signals received from the readout lines RL in response to the fourth control signal CONT4 received from the driving controller 200. For example, the sensing information may correspond to a fingerprint image. The processor or the driving controller 200 may perform a user authentication function using the sensing information provided from the readout circuit 600.

The reset driver 700 may provide a reset signal to the reset lines RSL in response to the fifth control signal CONT5 received from the driving controller 200. According to some embodiments, the reset driver 700 may be commonly connected to all light sensors LS through the reset line RSL. According to some embodiments, the reset driver 700 may be connected to each of the light sensors LS through a plurality of reset lines RSL.

The sub-pixel SP may include a light emitting element. The light emitting element may be a light emitting diode. The light emitting element may be configured of an organic light emitting element (organic light emitting diode), an inorganic light emitting element (inorganic light emitting diode), a quantum dot/well light emitting element (quantum dot/well light emitting diode), or the like. The light emitting element may emit light in one of a first color, a second color, and a third color. A plurality of sub-pixels SP may configure one pixel.

The light sensor LS may include a light receiving element. According to some embodiments, the light receiving element may be a photo diode. According to some embodiments, the light receiving element may be configured of a photo transistor.

Light emitted from the light emitting element may be reflected on a user's fingerprint and applied to a light receiving element adjacent to the light emitting element. In addition, the light sensor LS may generate a sensing signal corresponding to a light amount of the light applied to the light receiving element. The processor or the driving controller 200 may distinguish a valley and a ridge of the fingerprint according to an intensity of the sensing signal, and obtain a fingerprint image of a user through this.

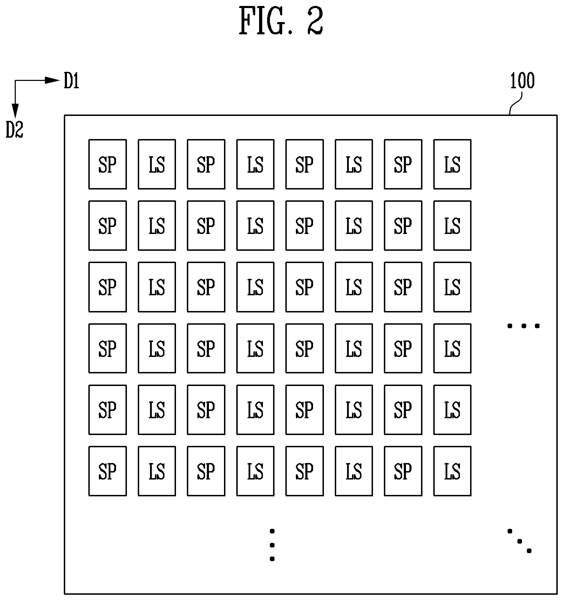

FIG. 2 is a diagram illustrating an example in which the sub-pixel and the light sensor are located in the display panel.

Referring to FIG. 2, the sub-pixel SP and the light sensor LS may be alternately arranged in the first direction D1 in the display panel 100. For example, based on the first direction D1, the sub-pixel SP may be located between two light sensors LS, and the light sensor LS may also be located between two sub-pixels SP. Meanwhile, the sub-pixels SP and the light sensors LS may be successively arranged in the second direction D2 in the display panel 100. As an example, the sub-pixels SP may be arranged in the second direction D2 in a first column. The light sensors LS may be arranged in the second direction D2 in a second column adjacent to the first column. As a result, according to some embodiments as shown in FIG. 2, a ratio of the number of sub-pixels SP and the number of light sensors LS may be 1:1.

However, this is an example, and embodiments according to the present disclosure are not limited thereto. For example, when each of the pixels of the display panel includes three sub-pixels, one light sensor may be arranged for each of the three sub-pixels. In this case, the ratio of the number of sub-pixels SP and the number of light sensors LS may be 3:1. As another example, when each of the pixels of the display panel includes four sub-pixels, one light sensor may be arranged for each of the four sub-pixels. In this case, the ratio of the number of sub-pixels SP and the number of light sensors LS may be 4:1. In other words, the ratio of the number of pixels and the number of light sensors may be 1:1. In addition to this, the ratio of the number of sub-pixels SP and the number of light sensors LS may be determined in various other methods, and a disposition method of the sub-pixels SP and the light sensors LS may also be determined in various methods.

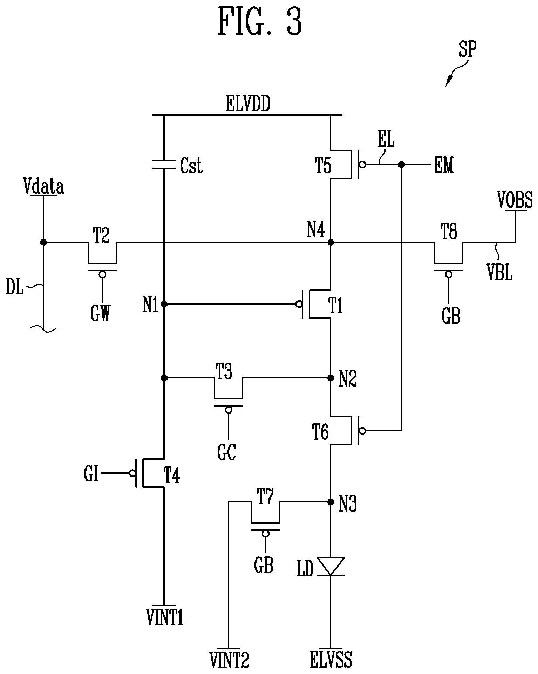

FIG. 3 is a circuit diagram illustrating aspects of the sub-pixel shown in FIGS. 1 and 2 according to some embodiments. Although FIG. 3 illustrates various components in a sub-pixel according to some embodiments, embodiments according to the present disclosure are not limited thereto, and according to various embodiments, the sub-pixel may include additional components or fewer components without departing from the spirit and scope of embodiments according to the present disclosure.

Referring to FIG. 3, the sub-pixel SP may include first to eighth transistors T1 to T8, a storage capacitor Cst, and a light emitting element LD. The first transistor T1 (that is, a driving transistor) includes a control electrode connected to a first node N1, a first electrode connected to a fourth node N4, and a second electrode connected to a second node N2. The second transistor T2 includes a control electrode receiving a write gate signal GW, a first electrode receiving a data voltage Vdata, and a second electrode connected to the fourth node N4. The third transistor T3 includes a control electrode receiving a compensation gate signal GC, a first electrode connected to the second node N2, and a second electrode connected to the first node N1. The fourth transistor T4 includes a control electrode receiving an initialization gate signal GI, a first electrode receiving a first initialization voltage VINT1, and a second electrode connected to the first node N1. The fifth transistor T5 includes a control electrode receiving an emission signal EM, a first electrode receiving a first power voltage ELVDD (for example, a high power voltage), and a second electrode connected to the fourth node N4. The sixth transistor T6 includes a control electrode receiving the emission signal EM, a first electrode connected to the second node N2, and a second electrode connected to a third node N3. The seventh transistor T7 includes a control electrode receiving a bias gate signal GB, a first electrode receiving a second initialization voltage VINT2 (that is, an anode initialization voltage), and a second electrode connected to the third node N3. The eighth transistor T8 includes a control electrode receiving the bias gate signal GB, a first electrode receiving a bias voltage VOBS, and a second electrode connected to the fourth node N4.

Meanwhile, the storage capacitor Cst includes a first electrode receiving the first power voltage ELVDD and a second electrode connected to the first node N1. The light emitting element LD includes a first electrode (that is, an anode electrode) connected to the third node N3 and a second electrode (that is, a cathode electrode) receiving a second power voltage ELVSS (for example, a low power voltage). The data voltage Vdata may be transmitted through the data line DL, and the emission signal EM may be transmitted through an emission line EL. In addition, the bias voltage VOBS may be transmitted through a bias voltage line VBL.

However, embodiments according to the present disclosure are not limited to the structure of the sub-pixel SP shown in FIG. 3. For example, each of the sub-pixels SP may have a 3T1C structure configured of three transistors and one capacitor, a 5T2C structure configured of five transistors and two capacitors, a 7T1C structure configured of seven transistors and one capacitor, a 9T1C structure configured of 9 transistors and 1 capacitor, or the like.

The first to seventh transistors T1, T2, T3, T4, T5, T6, and T7 may be implemented as p-channel metal oxide semiconductor (PMOS) transistors. In this case, a low voltage level may be an activation level, and a high voltage level may be a deactivation level. For example, when a signal applied to a control electrode of the PMOS transistor has the low voltage level, the PMOS transistor may be turned on. For example, when the signal applied to the control electrode of the PMOS transistor has the high voltage level, the PMOS transistor may be turned off.

However, embodiments according to the present disclosure are not limited thereto. For example, the first to seventh transistors T1, T2, T3, T4, T5, T6, and T7 may be implemented as n-channel metal oxide semiconductor (NMOS) transistors. In this case, a low voltage level may be a deactivation level, and a high voltage level may be an activation level. For example, when a signal applied to a control electrode of the NMOS transistor has the low voltage level, the NMOS transistor may be turned off. For example, when the signal applied to the control electrode of the NMOS transistor has the high voltage level, the NMOS transistor may be turned on. That is, an activation level and a deactivation level may be determined according to a type of a transistor.

For example, in an initialization period, the initialization gate signal GI may have an activation level and the fourth transistor T4 may be turned on. Accordingly, the first initialization voltage VINT1 may be applied to the first node N1. That is, the control electrode (that is, the storage capacitor Cst) of the first transistor T1 may be initialized.

For example, in a threshold voltage compensation period, the compensation gate signal GC may have an activation level, and the third transistor T3 may be turned on. Accordingly, the first transistor T1 may be diode connected. For example, the gate and drain of the first transistor T1 may be connected together, forming a diode configuration.

For example, in a data write period, the write gate signal GW may have an activation level, and the second transistor T2 and the third transistor T3 may be turned on. Accordingly, a voltage of the first node N1 may have a voltage in which a threshold voltage of the first transistor T1 is compensated for a data signal. Therefore, the data voltage Vdata may be written to the storage capacitor Cst.

For example, in an anode initialization period, the bias gate signal GB may have an activation level, and the seventh transistor T7 may be turned on. Accordingly, the second initialization voltage VINT2 may be applied to the first electrode (that is, the anode electrode) of the light emitting element LD.

For example, in an emission period, the emission signal EM may have an activation level, and the fifth transistor T5 and the sixth transistor T6 may be turned on. Accordingly, the first power voltage ELVDD may be applied to the first transistor T1 to generate a driving current, and the driving current may be applied to the light emitting element LD. That is, the light emitting element LD may emit light with a luminance corresponding to the driving current.

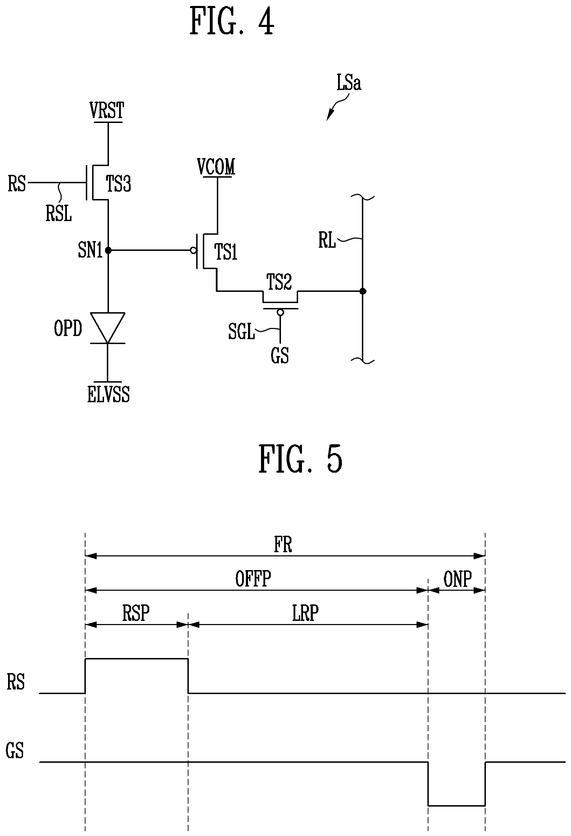

FIG. 4 is a circuit diagram illustrating aspects of the light sensor shown in FIGS. 1 and 2 according to some embodiments. Although FIG. 4 illustrates various components in a light sensor according to some embodiments, embodiments according to the present disclosure are not limited thereto, and according to various embodiments, the light sensor may include additional components or fewer components without departing from the spirit and scope of embodiments according to the present disclosure.

Referring to FIG. 4, the light sensor LSa includes a first sensing transistor TS1, a second sensing transistor TS2, a third sensing transistor TS3, and a light receiving element OPD. The first sensing transistor TS1 generates a sensing signal. The second sensing transistor TS2 transmits the sensing signal to the readout line RL in response to the sensing gate signal GS. The third sensing transistor TS3 initializes a control node of the first sensing transistor TS1 in response to a reset signal RS. The light receiving element OPD is connected to the control node of the first sensing transistor TS1. For example, the sensing signal may be a current generated by the first sensing transistor TS1.

For example, the first sensing transistor TS1 includes a control electrode connected to a first sensing node SN1, a first electrode receiving a common voltage VCOM, and a second electrode connected to a first electrode of the second sensing transistor TS2. The second sensing transistor TS2 includes a control electrode receiving the sensing gate signal GS, the first electrode connected to the second electrode of the first sensing transistor TS1, and a second electrode connected to the readout line RL. The light receiving element OPD includes a first electrode connected to the first sensing node SN1 and a second electrode receiving the second power voltage ELVSS (for example, the low power voltage). The third sensing transistor TS3 may include a control electrode receiving the reset signal RS, a first electrode receiving a reset voltage VRST, and a second electrode connected to the first sensing node SN1.

For example, according to some embodiments, the first and second sensing transistors TS1 and TS2 may be implemented as PMOS transistors, and the third sensing transistor TS3 may be implemented as an NMOS transistor. However, embodiments according to the present disclosure are not limited thereto.

FIG. 5 is a timing diagram illustrating a method of driving the light sensor shown in FIG. 4.

Referring to FIGS. 4 and 5 together, one frame FR includes a sensing on period ONP in which the sensing gate signal GS has an activation level and a sensing off period OFFP in which the sensing gate signal GS has a deactivation level. For example, as shown in FIG. 4, when the second sensing transistor TS2 is a PMOS transistor, the activation level of the sensing gate signal GS may be a low voltage level, and the deactivation level of the sensing gate signal GS may be a high voltage level.

The reset signal RS may have an activation period (that is, a reset period RSP) in the sensing off period OFFP in which the sensing gate signal GS has the deactivation level. In addition, the reset signal RS may have a deactivation period (that is, a light receiving period LRP) in the sensing off period OFFP. Here, the activation period is a period with an activation level, and the deactivation period is a period with a deactivation level.

For example, as shown in FIG. 4, when the third sensing transistor TS3 is an NMOS transistor, an activation level of the reset signal RS may be a high voltage level and a deactivation level may be a low voltage level.

According to some embodiments, it is illustrated that the reset period RSP is located at a start of the sensing off period OFFP, but embodiments according to the present disclosure are not limited thereto.

For example, in the reset period RSP, the reset signal RS may have the activation level and the sensing gate signal GS may have the deactivation level. Accordingly, the third sensing transistor TS3 may be turned on and the second sensing transistor TS2 may be turned off. In addition, the reset voltage VRST may be applied to the first sensing node SN1. That is, the first sensing node SN1 and the first electrode of the light receiving element OPD may be initialized.

For example, in the light receiving period LRP, the reset signal RS and the sensing gate signal GS may have the deactivation level. Accordingly, the second sensing transistor TS2 and the third sensing transistor TS3 may be turned off. In addition, when light is applied, the light receiving element OPD may generate a current in a direction of the first sensing node SN1, and a voltage of the first sensing node SN1 may be decreased. Accordingly, an intensity of the sensing signal generated in the sensing on period ONP to be described later may be changed. In addition, because a light amount of the light applied to the light receiving element OPD is changed according to the valley and the ridge of the fingerprint, the intensity of the sensing signal may be changed according to the valley and the ridge of the fingerprint.

For example, in the sensing on period ONP, the reset signal RS may have the deactivation level and the sensing gate signal GS may have the activation level. Accordingly, the second sensing transistor TS2 may be turned on and the third sensing transistor TS3 may be turned off. In addition, the first sensing transistor TS1 may generate a sensing signal corresponding to a gate-source voltage. The sensing signal may be applied to the readout circuit through the readout line RL.

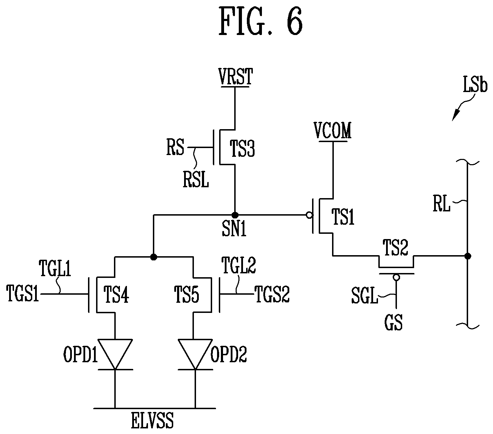

FIG. 6 is a circuit diagram illustrating aspects of the light sensor shown in FIGS. 1 and 2 according to some embodiments. Although FIG. 6 illustrates various components in a light sensor according to some embodiments, embodiments according to the present disclosure are not limited thereto, and according to various embodiments, the light sensor may include additional components or fewer components without departing from the spirit and scope of embodiments according to the present disclosure.

Referring to FIG. 6, the light sensor LSb includes a first sensing transistor TS1, a second sensing transistor TS2, a third sensing transistor TS3, a fourth sensing transistor TS4, a fifth sensing transistor TS5, a first light receiving element OPD1, and a second light receiving element OPD2. The first sensing transistor TS1 generates a sensing signal. The second sensing transistor TS2 transmits the sensing signal to the readout line RL in response to the sensing gate signal GS. The third sensing transistor TS2 initializes a control node of the first sensing transistor TS1 in response to the reset signal RS. In the circuit diagram of FIG. 6, the first to third sensing transistors TS1 to TS3 may be substantially the same components as the first to third sensing transistors TS1 to TS3 shown in FIG. 4. Therefore, an overlapping description for these is omitted.

Differently from the embodiments shown in FIG. 4, in the embodiments shown in FIG. 6, the light sensor LSb may include two light receiving elements. Each of the first and second light receiving elements OPD1 and OPD2 includes a second electrode connected to the second power voltage ELVSS. Meanwhile, the fourth sensing transistor TS4 is connected between a first sensing node SN1 and a first electrode of the first light receiving element OPD1. For example, the fourth sensing transistor TS4 includes a first electrode connected to the first sensing node SN1, a second electrode connected to the first electrode of the first light receiving element OPD1, and a control electrode receiving a first element control signal TGS1. The first element control signal TGS1 may be transmitted to the control electrode of the fourth sensing transistor TS4 through a first element control line TGL1. The fourth sensing transistor TS4 is selectively turned on by the first element control signal TGS1 to transmit a current generated by the first light receiving element OPD1 in a direction of the first sensing node SN1.

In addition, the fifth sensing transistor TS5 is connected between the first sensing node SN1 and a first electrode of the second light receiving element OPD2. For example, the fifth sensing transistor TS5 includes a first electrode connected to the first sensing node SN1, a second electrode connected to the first electrode of the second light receiving element OPD2, and a control electrode receiving a second element control signal TGS2. The second element control signal TGS2 may be transmitted to the control electrode of the fifth sensing transistor TS5 through a second element control line TGL2. The fifth sensing transistor TS5 is selectively turned on by the second element control signal TGS2 to transmit a current generated by the second light receiving element OPD2 in the direction of the first sensing node SN1.

According to some embodiments, the first and second element control lines TGL1 and TGL2 may be connected to the gate driver 300, and the first and second element control signals TGS1 and TGS2 may be transmitted to the control electrode of the fourth and fifth sensing transistors TS4 and TS5 from the gate driver of FIG. 1. According to some embodiments, the first and second element control lines TGL1 and TGL2 may be connected to the data driver 400 of FIG. 1, and the first and second element control signals TGS1 and TGS2 may be transmitted to the control electrode of the fourth and fifth sensing transistors TS4 and TS5 from the data driver 400. According to some embodiments, the first and second element control lines TGL1 and TGL2 may be connected to the timing controller 200 of FIG. 1, and the first and second element control signals TGS1 and TGS2 may be transmitted to the control electrode of the fourth and fifth sensing transistors TS4 and TS5 from the timing controller 200.

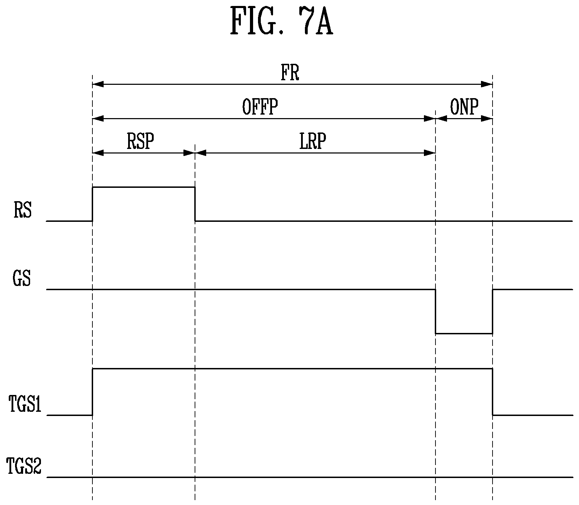

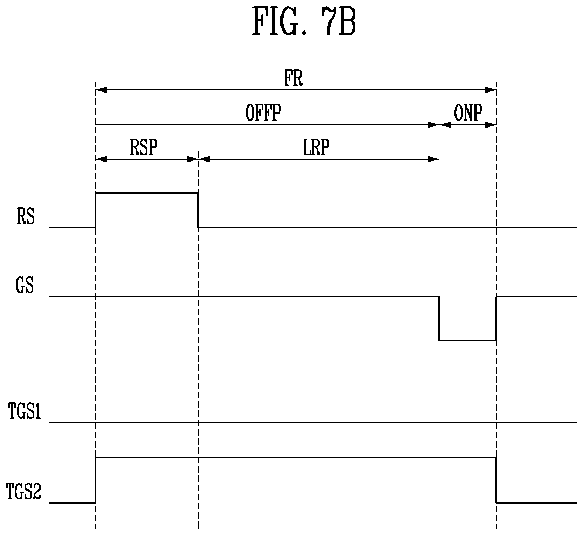

While a current corresponding to a light amount of light applied to the light receiving element OPD1 is transmitted to the readout line RL, the fourth sensing transistor TS4 may be turned on and the fifth sensing transistor TS5 may be turned off. Meanwhile, while a current corresponding to a light amount of light applied to the second light receiving element OPD2 is transmitted to the readout line RL, the fourth sensing transistor TS4 may be turned off and the fifth sensing transistor TS5 may be turned on. Hereinafter, embodiments according to the present disclosure are described with reference to FIGS. 7A and 7B.

FIGS. 7A and 7B are timing diagrams illustrating a method of driving the light sensor shown in FIG. 6. Referring to FIGS. 7A and 7B together, one frame FR includes a sensing on period ONP in which the sensing gate signal GS has an activation level and a sensing off period OFFP in which the sensing gate signal GS has a deactivation level. The reset signal RS may have an activation period (that is, a reset period RSP) in the sensing off period OFFP in which the sensing gate signal GS has the deactivation level. In addition, the reset signal RS may have a deactivation period (that is, a light receiving period LRP) in the sensing off period OFFP.

Referring to FIG. 7A, during the frame FR, the first element control signal TGS1 has an activation level and the second element control signal TGS2 has a deactivation level. That is, during the frame FR, the fourth sensing transistor TS4 maintains a turn-on state, and the fifth sensing transistor TS5 maintains a turn-off state. Accordingly, the current corresponding to the light amount of the light applied to the first light receiving element OPD1 may be transmitted to the readout line RL.

Referring to FIG. 7B, during the frame FR, the first element control signal TGS1 has a deactivation level and the second element control signal TGS2 has an activation level. That is, during the frame FR, the fourth sensing transistor TS4 maintains a turn-off state, and the fifth sensing transistor TS5 maintains a turn-on state. Accordingly, the current corresponding to the light amount of the light applied to the second light receiving element OPD2 may be transmitted to the readout line RL.

That is, during a sensing operation of the light applied to the first light receiving element OPD1, the light sensor LSb may operate according to the timing diagram of FIG. 7A. Meanwhile, during a sensing operation of the light applied to the second light receiving element OPD2, the light sensor LSb may operate according to the timing diagram of FIG. 7B.

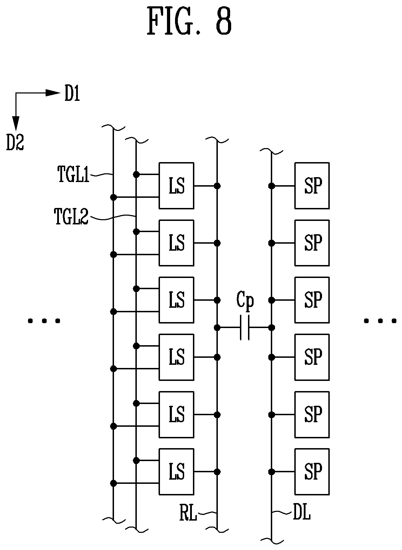

FIG. 8 is a diagram illustrating a coupling phenomenon between the readout line connected to the light sensor and the data line connected to the sub-pixel.

Referring to FIG. 8, a portion of the sub-pixels SP and light sensors LS included in the display panel in the display device is shown. For example, FIG. 8 shows light sensors LS corresponding to one column and sub-pixels SP corresponding to a column adjacent thereto.

Each of the light sensors LS shown in FIG. 8 may be configured as the light sensor LSb according to the circuit diagram of FIG. 6. Accordingly, the control electrodes of the fourth and fifth sensing transistors TS4 and TS5 included in the light sensors LSb may be connected to the first and second element control lines TGL1 and TGL2, respectively. As shown in FIG. 8, each of the first and second element control lines TGL1 and TGL2 may extend in the second direction D2. As described above, the first and second element control lines TGL1 and TGL2 may be connected to the data driver 400, the gate driver 300, or the timing controller 200.

In addition, each of the light sensors LS may be connected to the readout line RL. The readout line RL may extend in the second direction D2 and may be connected to the readout circuit 600 of FIG. 1.

Meanwhile, each of the sub-pixels SP may be connected to the data line DL. As shown in FIG. 3, the data voltage Vdata may be transmitted to the fourth node N4 through the second transistor T2 through the data line DL. As shown in FIG. 8, the data line DL may extend in the second direction D2 and may be connected to the data driver 400.

In FIG. 8, lines other than the data line DL connected to the sub-pixels SP, the readout line RL connected to the light sensor LS, and the first and second element control lines TGL1 and TGL2 are omitted.

Referring to FIG. 8, the data line DL and the readout line RL may extend in the second direction D2. As resolution of the display panel increases, a distance between the sub-pixels SP and the light sensor LS may be decreased. Accordingly, a distance between the data line DL and the readout line RL may also be decreased. As a result, coupling of the data line DL and the readout line RL may occur due to a parasitic capacitance Cp between the data line DL and the readout line RL. This means that a change in a voltage or a current of the data line DL may affect a voltage or a current of the readout line RL. As a result, in a case where the voltage or the current of the data line DL changes, this may act as noise on a current transmitted to the readout circuit through the readout line RL and may cause a problem that a sensing result of the light sensor LS is inaccurate.

Referring to FIG. 8, coupling by the data line DL located on a right side of the readout line RL is described. Although not directly shown in FIG. 8, coupling by the data line DL located on a left side of the readout line RL may also occur.

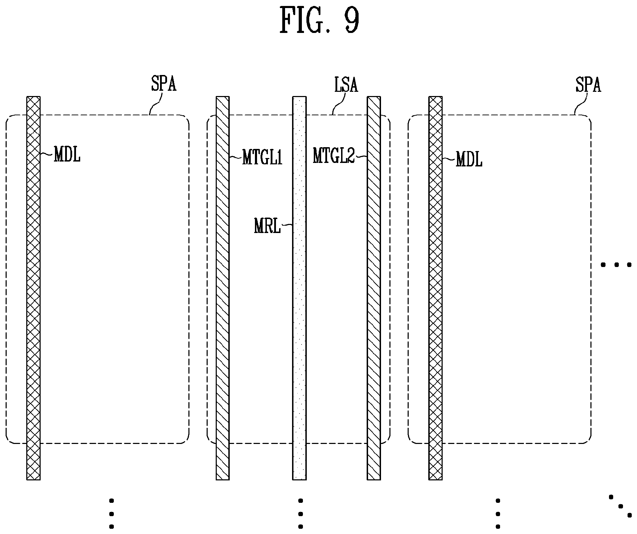

In the display device according to some embodiments of the present disclosure, a line is configured so that a conductor configuring the readout line RL is positioned between a conductor configuring the first element control line TGL1 and a conductor configuring the second element control line TGL2 on the display panel. Accordingly, the first and second element control lines TGL1 and TGL2 shield coupling between the readout line RL and adjacent data lines DL. Through this, accuracy of the sensing result of the light sensor LS may be relatively improved. Hereinafter, aspects of embodiments according to the disclosure are described in more detail with reference to FIG. 9.

FIG. 9 is a diagram illustrating a line structure connected to a light sensor in a display panel according to some embodiments of the present disclosure.

Referring to FIG. 9, a partial line structure crossing a portion of a sub-pixel area SPA and a light sensor area LSA in the display panel is shown. In FIG. 9, the sub-pixel area SPA may be defined as an area where elements configuring the sub-pixel SP are formed. According to some embodiments, components of the circuit shown in FIG. 3 may be formed in the sub-pixel area SPA. Meanwhile, in FIG. 9, the light sensor area LSA may be defined as an area where elements configuring the light sensor LS are formed. According to some embodiments, components of the circuit shown in FIG. 6 may be formed in the light sensor area LSA.

For example, FIG. 9 shows two sub-pixel areas SPA among a plurality of sub-pixel areas and a light sensor area LSA positioned between the two sub-pixel areas.

A conductor MDL configuring a portion of the data line DL is arranged to cross each sub-pixel area SPA in the second direction D2. The conductor MDL may extend to cross the sub-pixel area SPA successively arranged in a column direction, that is, the second direction D2.

Meanwhile, conductors MTGL1 and MTGL2 configuring a portion of the first and second element control lines TGL1 and TGL2 are arranged to cross the light sensor area LSA in the second direction D2. In addition, conductors (or a conductor) MRL configuring a portion of the readout line RL are arranged to cross the light sensor area LSA in the second direction D2. The conductor MDL may extend to cross the sub-pixel area SPA successively arranged in the column direction, that is, the second direction D2.

For convenience of discussion, in FIG. 9, other components configuring the light sensor LS other than the conductors MTGL1 and MTGL2 respectively configuring a portion of the first and second element control lines TGL1 and TGL2 and the conductors (or the conductor) MRL configuring a portion of the readout line RL are omitted. In addition, in FIG. 9, other components configuring the sub-pixel SP other than the conductor MDL configuring a portion of the data line DL are omitted.

According to some embodiments of the present disclosure, the conductors MRL configuring a portion of the readout line RL in the light sensor area LSA, and the conductors MTGL1 and MTGL2 respectively configuring a portion of the first and second element control lines TGL1 and TGL2 are arranged parallel to each other. As shown in FIG. 9, the conductors MRL configuring a portion of the readout line RL and the conductors MTGL1 and MTGL2 respectively configuring a portion of the first and second element control lines TGL1 and TGL2 are arranged to extend along the second direction D2 in the light sensor area LSA.

In addition, the conductors (or the conductor) MRL configuring a portion of the readout line RL are (or is) located between the conductors MTGL1 and MTGL2 respectively configuring a portion of the first and second element control lines TGL1 and TGL2 in the light sensor area LSA. Accordingly, while a current from the light sensor LS flows through the readout line RL, the first and second element control lines TGL1 and TGL2 shield coupling from data lines connected to an adjacently positioned sub-pixel.

For example, the conductor MTGL1 configuring a portion of the first element control line TGL1 may shield coupling from the conductor MDL located on a left side of the light sensor area LSA. In addition, the conductor MTGL2 configuring a portion of the second element control line TGL2 may shield coupling from the conductor MDL located on a right side of the light sensor area LSA to the conductor MRL.

As described above with reference to FIGS. 7A and 7B, during the sensing on period ONP in which the sensing gate signal GS has the activation level, a current corresponding to the voltage of the first sensing node SN1 is transmitted through the readout line RL.

Referring to FIG. 7A, during the sensing on period, the first element control signal TGS1 has an activation level, and the second element control signal TGS2 has an deactivation level. That is, a voltage of an activation level is applied to the first element control line TGL1, and a voltage of a deactivation level is applied to the second element control line TGL2. Therefore, the conductors MTGL1 and MTGL2 respectively configuring a portion of the first and second element control lines TGL1 and TGL2 may shield coupling from the conductors MDL respectively arranged on the left side and the right side of the light sensor area LSA to the conductor MRL.

Referring to FIG. 7B, during the sensing on period, the first element control signal TGS1 has a deactivation level and the second element control signal TGS2 has an activation level. That is, a voltage of a deactivation level is applied to the first element control line TGL1, and a voltage of an activation level is applied to the second element control line TGL2. Therefore, the conductors MTGL1 and MTGL2 respectively configuring a portion of the first and second element control lines TGL1 and TGL2 may shield coupling from the conductors MDL respectively arranged on the left side and the right side of the light sensor area LSA to the conductor MRL.

According to some embodiments, the conductor MDL configuring a portion of the data line DL, the conductors MTGL1 and MTGL2 respectively configuring a portion of the first and second element control lines TGL1 and TGL2, and the conductor MRL configuring a portion of the readout line RL may be formed in the same layer. According to some embodiments, at least one of the conductor MDL configuring a portion of the data line DL, the conductors MTGL1 and/or MTGL2 respectively configuring a portion of the first and second element control lines TGL1 and/or TGL2, or the conductor MRL configuring a portion of the readout line RL may be formed in a layer different from that of remaining conductors.

As described above, according to the display device according to some embodiments of the present disclosure, the conductor MRL configuring a portion of the readout line RL is located between the conductors MTGL1 and MTGL2 respectively configuring a portion of the first and second element control lines TGL1 and TGL2 in the light sensor area in the display panel. In addition, while the current corresponding to the voltage of the first sensing node in the light sensor LSb is transmitted to the readout circuit through the readout line RL (for example, the sensing on period ONP of FIGS. 7A and 7B), the voltage of the activation level or the voltage of the deactivation level is applied to the conductors MTGL1 and MTGL2 respectively configuring a portion of the first and second element control lines TGL1 and TGL2. Accordingly, coupling from an adjacently positioned data line DL to the readout line RL may be shielded.

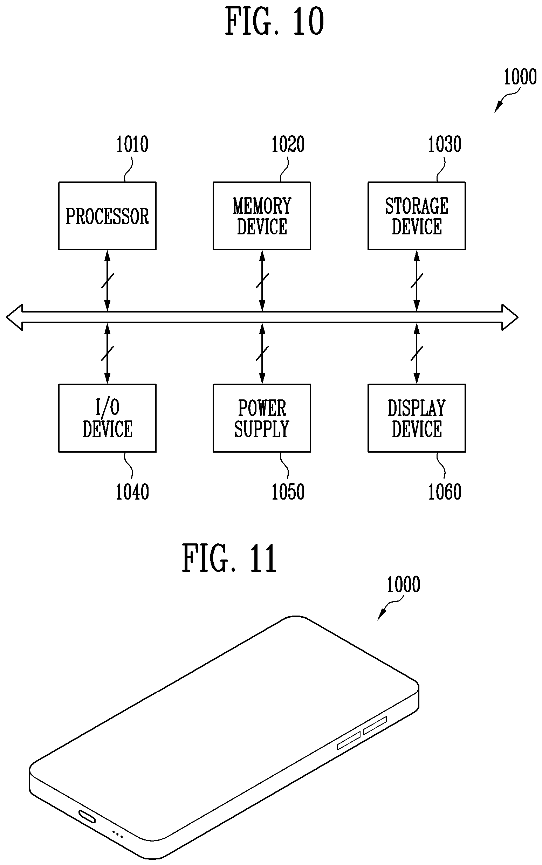

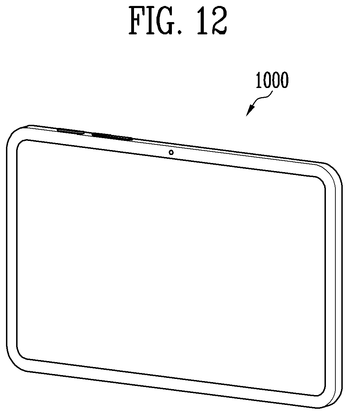

FIG. 10 is a block diagram illustrating an electronic device according to some embodiments of the disclosure, FIG. 11 is a diagram illustrating embodiments in which the electronic device of FIG. 10 is implemented as a smartphone, and FIG. 12 is a block diagram illustrating embodiments in which the electronic device of FIG. 10 is implemented as a tablet PC.

Referring to FIGS. 10 to 12, the electronic device 1000 may include a processor 1010, a memory device 1020, a storage device 1030, an input/output device 1040, a power supply 1050, and a display device 1060. At this time, the display device 1060 may be the display device of FIG. 1. In addition, the electronic device 1000 may further include several ports capable of communicating with a video card, a sound card, a memory card, a USB device, or the like, or communicating with other systems. According to some embodiments, as shown in FIG. 11, the electronic device 1000 may be implemented as a smart phone. According to some embodiments, as shown in FIG. 12, the electronic device 1000 may be implemented as a tablet PC. However, this is an example, and the electronic device 1000 is not limited thereto. For example, the electronic device 1000 may be implemented as a mobile phone, a video phone, a smart pad, a smart watch, a vehicle navigation device, a computer monitor, a notebook computer, a head mounted display device, or the like.

The processor 1010 may perform specific calculations or tasks. According to some embodiments, the processor 1010 may be a microprocessor, a central processing unit, an application processor, or the like. The processor 1010 may be connected to other components through an address bus, a control bus, a data bus, or the like. According to some embodiments, the processor 1010 may also be connected to an expansion bus such as a peripheral component interconnect (PCI) bus.

The memory device 1020 may store data necessary for an operation of the electronic device 1000. For example, the memory device 1020 may include a non-volatile memory device such as an erasable programmable read-only memory (EPROM) device, an electrically erasable programmable read-only memory (EEPROM) device, a flash memory device, a phase change random access memory (PRAM) device, a resistance random access memory (RRAM) device, a nano floating gate memory (NFGM) device, a polymer random access memory (PoRAM) device, a magnetic random access memory (MRAM), and a ferroelectric random access memory (FRAM) device, a volatile memory device such as a dynamic random access memory (DRAM) device, a static random access memory (SRAM) device, and a mobile DRAM device, and/or the like.

The storage device 1030 may include a solid state drive (SSD), a hard disk drive (HDD), a CD-ROM, and the like.

The input/output device 1040 may include an input means such as a keyboard, a keypad, a touch pad, a touch screen, and a mouse, and an output means such as a speaker and a printer. According to some embodiments, the display device 1060 may be included in the input/output device 1040.

The power supply 1050 may supply power necessary for an operation of the electronic device 1000. For example, the power supply 1050 may be a power management integrated circuit (PMIC).

The display device 1060 may display images corresponding to visual information of the electronic device 1000. At this time, the display device 1060 may be an organic light emitting display device or a quantum dot light emitting display device, but is not limited thereto. The display device 1060 may be connected to other components through the buses or other communication links.

Although specific embodiments and application examples are described herein, other embodiments and variations may be derived from the above description. Therefore, the present disclosure is not limited to these embodiments, but extends to the scope of the claims set forth below.

## Claims

1. A display device (1060) comprising:
a sub-pixel connected to a data line; and
a light sensor adjacent to the sub-pixel in a first direction and connected to a readout line, a first element control line, and a second element control line,
wherein the readout line is configured to receive a current corresponding to a light amount of light applied to the light sensor, and
in an area where the light sensor is formed, a third conductor configuring a portion of the readout line is arranged between a first conductor configuring a portion of the first element control line and a second conductor configuring a portion of the second element control line.

2. The display device (1060) according to claim 1, comprising:
a display panel (100) including a plurality of sub-pixels and a plurality of light sensors; and
a display panel (100) driver (700) configured to drive the display panel (100),
wherein each of the plurality of sub-pixels is connected to the display panel (100) driver (700) through data lines, and
each of the plurality of light sensors is connected to the display panel (100) driver (700) through a readout line, a first element control line, and a second element control line.

3. The display device (1060) according to claim 1 or claim 2, wherein in an area where the sub-pixel or one sub-pixel among the plurality of sub-pixels is formed, a fourth conductor configuring a portion of the data line extends along a second direction perpendicular to the first direction, and
in the area where the light sensor is formed, each of the first to third conductors extend along the second direction.

4. The display device (1060) according to claim 3, wherein at least one of the first conductor or the second conductor is configured to, while the current corresponding to the light amount of the light applied to the light sensor is transmitted to the readout line, shield coupling to the third conductor from the fourth conductor.

5. The display device (1060) according to one of claims 1 to **4,** wherein the display device (1060) is configured such that, while the current corresponding to the light amount of the light applied to the light sensor is transmitted to the readout line, a voltage corresponding to an activation level or a deactivation level is respectively applied to the first conductor and the second conductor.

6. The display device (1060) according to one of claims 1 to 5, wherein the light sensor or one of the plurality of light sensors comprises:
a first sensing transistor having a control electrode connected to a first sensing node and a first electrode connected to a common voltage;
a second sensing transistor having a control electrode connected to a sensing gate line, a first electrode connected to a second electrode of the first sensing transistor, and a second electrode connected to the readout line;
a third sensing transistor having a control electrode connected to a reset line, a first electrode connected to a reset voltage, and a second electrode connected to the first sensing node;
a fourth sensing transistor having a control electrode connected to the first element control line and a first electrode connected to the first sensing line;
a fifth sensing transistor having a control electrode connected to the second element control line and a first electrode connected to the first sensing line;
a first light receiving element connected between a second electrode of the fourth sensing transistor and a power voltage; and
a second light receiving element connected between the second electrode of the fifth sensing transistor and the power voltage.

7. The display device (1060) according to one of claims 1 to 6, wherein the first element control line is configured to, in response to a sensing on period of the light sensor, receive a voltage of an activation level, the second element control line is configured to receive a voltage of a deactivation level, and the readout line is configured to receive a current corresponding to a light amount of light applied to the first light receiving element.

8. The display device (1060) according to one of claims 1 to 7, wherein the first element control line is configured to, in response to a sensing on period of the light sensor, receive a voltage of a deactivation level, the second element control line is configured to receive a voltage of an activation level, and the readout line is configured to receive a current corresponding to a light amount of light applied to the second light receiving element.

9. The display device (1060) according to one of claims 2 to 8, wherein the plurality of sub-pixels and the plurality of light sensors are alternately arranged in a first direction, and
the plurality of sub-pixels or the plurality of light sensors are successively arranged in a second direction perpendicular to the first direction.

10. The display device (1060) according to one of claims 2 to 9, wherein each of the plurality of light sensors includes a first light receiving element and a second light receiving element,
a current generated from the first light receiving element is selectively transmitted to a first sensing node, based on a first element control signal transmitted through the first element control line, and
a current generated from the second light receiving element is selectively transmitted to the first sensing node, based on a second element control signal transmitted through the second element control line.

11. An electronic device (1000) comprising:
a processor (1010) configured to provide input image data to a display device (1060);
the display device (1060) configured to display an image based on the input image data; and
a power supply (1050) configured to supply power to the display device (1060),
wherein the display device (1060) comprises:
a display panel (100) including a plurality of sub-pixels and a plurality of light sensors; and
a display panel (100) driver (700) configured to drive the display panel (100),
each of the plurality of sub-pixels is connected to the display panel (100) driver (700) through data lines,
each of the plurality of light sensors is connected to the display panel (100) driver (700) through a readout line, a first element control line, and a second element control line,
a current corresponding to a light amount of light applied to the light sensor is transmitted to the readout line,
in an area where one light sensor among the plurality of light sensors is formed, a third conductor configuring a portion of the readout line is between a first conductor configuring a portion of the first element control line and a second conductor configuring a portion of the second element control line.

12. The electronic device (1000) according to claim 11, wherein each of the plurality of light sensors is arranged between any two sub-pixels among the plurality of sub-pixels in a first direction, and
the plurality of sub-pixels or the plurality of light sensors are successively arranged in a second direction perpendicular to the first direction.

13. The electronic device (1000) according to claim 11 or claim 12, wherein each of the plurality of light sensors includes a first light receiving element and a second light receiving element, the electronic device being further configured such that
a current generated from the first light receiving element is selectively transmitted to a first sensing node, based on a first element control signal transmitted through the first element control line, and
a current generated from the second light receiving element is selectively transmitted to the first sensing node, based on a second element control signal transmitted through the second element control line.

14. The electronic device (1000) according to one of claims 11 to 13, wherein at least one of the first conductor or the second conductor is configured to, while the current corresponding to the light amount of the light applied to a light sensor from among the light sensors is transmitted to the readout line, shield coupling to the third conductor from a fourth conductor configuring a portion of a data line from among the data lines.
